# EUROPÄISCHE PATENTSCHRIFT

(11) **EP 2 913 607 B1**
(45) Veröffentlichungstag und Bekanntmachung des Hinweises auf die Patenterteilung: **30.10.2019**
(21) Anmeldenummer: 14197302.4
(22) Anmeldetag: 11.12.2014
(51) Int. Cl.: B23C 3/00, F28F 21/06, B29D 23/00, F24T 10/15

(54) **Erdwärmesondenfuß und Erdwärmesonde**
Geothermal heat probe base and geothermal heat probe
Pied de sonde d'énergie géothermique et sonde d'énergie géothermique

(30) Priorität: 15.04.2014 DE 202014003234 U; 27.02.2014 DE 102014002651
(43) Veröffentlichungstag der Anmeldung: 02.09.2015
(60) Teilanmeldung: 16176343.8
(73) Patentinhaber: G.H.P.- e.K. Geothermie- Handel- und Produktion e.k., 83224 Grassau (DE)
(72) Erfinder: SCHUSTER, Franz-Xaver, 83224 Grassau (DE)
(74) Vertreter: Becker Kurig Straus

(56) Entgegenhaltungen:
- EP-A1- 2 395 301
- EP-A2- 2 273 213
- WO-A1-03/064915
- AT-A1- 505 104
- CH-A5- 687 268
- DE-A1-102007 002 606
- DE-A1-102008 029 400
- DE-B3-102007 025 905
- DE-U1- 20 306 216
- JP-A- 2001 255 081
- JP-A- 2006 234 340
- US-A1- 2002 104 643
- US-A1- 2013 292 937
- US-A1- 2013 333 383

## Beschreibung

Die vorliegende Erfindung betrifft einen Erdwärmesondenfuß und eine Erdwärmesonde.

Eine Erdwärmesonde ist ein geschlossenes, mit einer zirkulierenden Wärmeträgerflüssigkeit befülltes U-förmiges Rohrsystem. Sie wird in der Regel in ein vertikal oder seltener schräg angeordnetes Bohrloch in dem Untergrund eingebaut. Mit der Erdwärmesonde wird dem Erdreich Wärme entzogen, die meist an den Wärmetauscher (Verdampfer) einer Wärmepumpe weitergegeben wird. Mit Hilfe der Wärmepumpe ist die wirtschaftliche Nutzung der Erdwärme zur Gebäudeheizung möglich. Die Erdwärmesonde ist eine Nutzungsmöglichkeit der oberflächennahen Geothermie.

Die übliche und weit verbreitete Erdwärmesonde besteht aus Polyethylen-Kunststoffrohren, die am jeweils unteren Ende mit einem U-förmigen Fußteil verbunden sind. Man spricht daher auch von U-Sonden oder Doppel-U-Sonden, wenn zwei Rohrpaare pro Bohrloch verwendet werden. Möglich sind aber auch koaxiale Sonden, bei denen Vor- und Rücklauf bzw. Auf- und Abstieg des Wärmeträgerfluids im Innenrohr und im Ringraum zwischen innerem und äußerem Rohr der Koaxialsonde erfolgen. Die Rohre werden im geschlossenen Kreislauf von einer Sole, einem Gemisch aus Wasser und Frostschutzmittel, durchströmt. Solegefüllte Erdsonden sind jedoch häufig in wasserwirtschaftlich sensiblen Gebieten nicht zugelassen.

Aus den Patentschriften CH 697102A5, der Offenlegungsschrift DE 10 2007 002 606 A1 sowie der Gebrauchsmusterschrift DE 203 06 216 U1 sind bereits verschiedene Erdwärmesonden bekannt. Weitere Dokumente, die Erdwärmesonden-Füße und Erdwärmesonden betreffen, sind beispielsweise die Patentdokumente mit den Veröffentlichungsnummern AT 505 104 A1, WO 03/064915 A1, DE 10 2007 002606 A1, DE 10 2007 025905 B3, DE 203 06 216 U1, EP 2395301 A1, CH 687268 A5,

Bei bisher bekannten Erdwärmesondenfüßen treten Probleme auf, da die Sondenfüße entweder im Spritzguss hergestellt wurden oder aus mehreren Teilen zusammengesetzt werden. Beim Spritzguss können Probleme durch beim Spritzvorgang gebildete Oberflächen- Strukturen oder durch Grate an unterschiedlichen Teile der Spritzform entstehen. Bei Schweißvorgängen entstehen üblicherweise Schweißnähte und Schweißgrate, wobei die Schweißnähte eine Schwächung des Bauteil bedeuten, und die Schweißgrate üblicherweise einen Schweißgrat erzeugen, der sich auch in einen Kanal erstreckt, durch den das Wärmeträgerfluid fließt und in seiner Strömung behindert wird.

Es ist Aufgabe der vorliegenden Erfindung, einen Erdwärmesondenfuß bereitzustellen, der die vorgenannten Nachteile nicht aufweist, besonders stabil ist und eine besonders strömungsgünstige Form des Kanals aufweist.

Diese Aufgabe wird gelöst durch einen Erdwärmesondenfuß mit den Merkmalen gemäß Anspruch 1 und durch eine Erdwärmesonde gemäß Anspruch 10. Bevorzugte Ausführungsformen sind in den abhängigen Ansprüchen beschrieben. Der Erdwarmesondenfuß aus Polyethylen umrasst einen einstückigen Körper, der mindestens zwei parallel ausgerichtete Muffen zur Verbindung mit mindestens zwei Erdwärmerohren umfasst. Weiterhin umfasst der Körper mindestens einen u-förmigen Kanal, der die zwei parallel ausgerichteten Muffen miteinander verbindet, wobei der u-förmige Kanal glatt ist und keine Querschnittsverengungen aufweist. Der Erdwärmesondenfuß wurde dabei durch Spanen aus einem einzelnen Polyethylen-Block spanend herausgearbeitet.

Da der Erdwärmesondenfuß aus einem einzelnen Block Polyethylen durch Spanen hergestellt wurde kann man dies an dessen Oberflächenstruktur eindeutig erkennen. Der Erdwärmesondenfuß wird aus einem einzelnen Block Polyethylen durch Spanen hergestellt, und umfasst daher keine Schweißnähte, was sich positiv auf seine Festigkeit auswirkt.

In einer Ausführungsform des Erdwärmesondenfußes umfasst der Kanal unmittelbar an die Muffen anschließend zwei Bohrungen. Die Bohrungsachsen sind in einem Winkel zwischen 4° und 12° gegenüber den parallelen Muffen geneigt. In einer Ausführungsform sind die Bohrungen gefräst und weisen einen ovalen Querschnitt auf, der sich aus dem schrägen Schnitt der Bohrung mit der kreisrunden Muffe ergibt. Die Bohrungen sind dabei nicht so tief ausgeführt, dass sie sich treffen bzw. schneiden oder ineinander laufen und so alleine einen Kanal bilden. Es ist zu bemerken, dass die Erfindung nicht darauf beruht, dass sich zwei schräge Bohrungen in dem Block treffen und dadurch bereits einen vollständigen Kanal bilden. Die schrägen Bohrungen, die auch gefräst sein können, ermöglichen bereits eine leichte Umlenkung des Erdwärmefluids an dem Übergang zwischen Muffe und der geneigten Bohrung bzw. dem Kanal. Der mindestens ein U-formiger kanal anschließend an jede der beiden Muffen, die durch ihn verbunden sind, umfasst jeweils eine jeweilige Bohrung, wobei die Bohrungen jeweils in einen jeweiligen Bogenabschnitt übergehen, und wobei die jeweiligen Bogenabschnitte durch einen Abschnitt zwischen den Bogenabschnitten verbunden sind, und wobei die Bogenabschnitte gegenüber den Bohrungen und dem Abschnitt zwischen den Bogenabschnitten einen erhöhten Durchmesser aufweisen, und wobei eine Querschnittsfläche des Kanals in den Bogenabschnitten gegenüber einem Ende der Bohrung um 10% bis 50% vergrößert ist.

Durch die Vergrößerung des Querschnittes kann die Strömungsgeschwindigkeit des Erdwärmefluids verringert werden, wodurch die Belastung des Kanals bzw. der Kanalwand im Bereich der Bogenabschnitte verringert wird. Durch einen vergrößerten Querschnitt wird eine längere Lebensdauer des Erdwärmesondenfußes und verringerter Energieverbrauch bei der Umwälzung erwartet.

In einer weiteren Ausführungsform des Erdwärmesondenfußes weist der Kanal zwischen den Bogenabschnitten einen Abschnitt auf, dessen Querschnittsfläche gleich der Querschnittsfläche der Bohrungen ist. Diese Angabe betrifft eine kleinste Querschnittsfläche des Abschnitts innerhalb einer Fertigungstoleranz zwischen -4 bis +4%. Es ist vorgesehen, die Bogenabschnitte auch direkt aneinander anzuschliessen, sodass kein zwischenliegender Abschnitt ausgebildet wird.

In einer zusätzlichen Ausführungsform des Erdwärmesondenfußes bildet eine Innenkontur des Kanals eine Parabel. Die Innenkontur wird jeweils durch die höchste Linie des Kanals bei einer seitlichen Projektion gebildet. Es ist vorgesehen, diese Innenkontur als glatte Parabel auszuführen, um eine Umlenkung des Erdwärmefluid möglichst gleichmäßig zu gestalten.

In einer weiteren Ausführungsform des Erdwärmesondenfußes bildet der gesamte Kanal eine Parabel oder ein Segment eines Ellipsoid-Torus. In dieser Ausführung sind die beiden Bogenabschnitte direkt miteinander verbunden, um eine durchgängige und glatte Struktur zu bilden. Auch bei dieser Ausführungsform kann der Querschnitt des Ellipsoid-Torus-förmigen Kanals im Bereich der Bogenabschnitte vergrößert sein.

Bei einer weiteren Ausführungsform des Erdwärmesondenfußes wurde der mindestens eine u-förmige Kanal mittels einer 5-Achsen-CNC-Fräse durch Spanen hergestellt. Dies ist bei Verwendung von Fräsern mit relativ großen Köpfen und dünnen Schäften möglich. Es können hier Fräser eingesetzt werden, da das zu bearbeitende Material im Vergleich zu Metall weich ist. Die Bearbeitung von PE ermöglicht viel größere Freiheiten bei der Gestaltung von Spezialwerkzeugen. Bei einer zusätzlichen Ausführungsform des Erdwärmesondenfußes wurde der mindestens eine u-förmige Kanal mittels eines Rundfräskopfes mit einem Wirbelfräsverfahren herausgearbeitet. Wirbelfräsen ermöglicht ein Spanen, ohne dass längere Späne entstehen, was in Verbindung mit dem weichen PE-Material erst das Fräsen des Kanals gestattet. Durch das Wirbelfräsen werden längere Späne vermieden, die den Fräsvorgang behindern oder unmöglich machen würden. Somit ermöglicht ein Wirbelfräsen eine spanende Bearbeitung in einem größeren Bereich als es bei herkömmlichen Fräsvorrichtungen möglich ist.

In einer bespielhaften Ausführung des Erdwärmesondenfußes umfasst dieser genau zwei Muffen, die jeweils durch genau einen Kanal miteinander verbunden sind. Dieser Ausführung entspricht ein Sondenfuß für eine Einfach-U-Sonde.

In einer weiteren Ausführungsform sind zwei dieser einfachen U-Sondenfüße durch ein Verbindungselement zu einem Doppel-U-Sondenfuß verbunden. Diese Ausführung gestattet es, schnell und einfach zwei Einfach-U-Sondenfüße zu einem einzelnen Doppel-U-Sondenfuß zu kombinieren. Hier treffen die Merkmale jeweils auf jeden der Teile des Doppel-U-Sondenfußes zu. Bevorzugt ist diese Version mit einer Längsnut parallel zu den Muffen versehen, in die ein Metallstreifen bzw. ein Flacheisen eingelegt werden kann. Ein derartiger Metallstreifen kann Öffnungen aufweisen, um die Handhabung des Einzel-U- oder des Doppel-U-Sondenfußes zu vereinfachen. Der Metallstreifen kann ein Gewicht aufnehmen oder gelenkig oder starr mit einem Gewicht verbunden werden, um ein Absenken der Sonde in ein Bohrloch zu vereinfachen. Zusätzlich kann an einer Oberseite des Metallstreifens ein Rohrstück, eine Rohrhülse bzw. eine Zentrierhülse angebracht sein, in das ein Verpress-Gestänge einer Eindruck- oder Einschubvorrichtung zum Einschieben der Sonde in das Bohrloch eingesetzt werden kann.

Bei einer anderen Ausführungsform des Erdwärmesondenfuß ist in dem Erdwärmesondenfuß mit zwei Muffen eine Längsnut vorgesehen. In diese Längsnut kann ein Flacheisen eingelegt bzw. befestigt werden. Durch das Flacheisen oder einen Flachstahl kann beispielsweise ein Gewicht an dem Erdwärmesondenfuß befestigt werden. Das Flacheisen kann beispielsweise durch eine Querschraube mit dem Erdwärmesondenfuß verbunden werden. An dem Flacheisen kann direkt ein Gewicht angeschraubt oder angeschweißt sein.

Das Flacheisen kann auch als Verbindungselement dienen, das die beiden erfindungsgemäßen Einfach-U-Sondenfüße zu einem Doppel-U-Sondenfuß verbinden, wobei die Nut dazu dient, die Einfach-U-Sondenfüße zusammen mit dem Flacheisen zueinander auszurichten. Das Flacheisen kann mit Durchgangsöffnungen versehen sein, um die Einfach-U-Sondenfüße miteinander zu verschrauben/verbinden oder um ein Gewicht oder ein Einschubgestänge an dem Sondenfuß anzubringen.

In einer Ausführungsform sind zwei Einfach-U-Sondenfüße zu einem Doppel-U-Sondenfuß verbunden. Es ist möglich, diese gegeneinander auszurichten, wenn die einzelnen Einfach-U-Sondenfüße mit Nuten versehen sind, die es ermöglichen, dass sie direkt oder über ein Bindeglied wie ein Flacheisen miteinander in Eingriff stehen.

Bei einer anderen Ausführungsform des Erdwärmesondenfußes umfasst dieser vier Muffen und zwei Kanäle. Damit bildet der Sondenfuß einen Doppel-U-Sondenfuß. Im Prinzip sind auch Dreifach- oder Vierfach-U-Sondenfüße bzw. Mehrfach-U-Sondenfüße möglich.

In einer weiteren beispielhaften Ausführungsform des Erdwärmesondenfußes ist dieser mit einem, zwei, drei oder vier Seitenkanälen versehen. Die Seitenkanäle gestatten ein einfacheres Herablassen der Sonde / des Sondenfußes in ein mit Wasser, Schlamm bzw. Bohrschlamm gefülltes Bohrloch. Es ist ebenfalls vorgesehen, ein eventuell verwendetes Gewicht mit entsprechenden Seitenkanälen zu versehen. Die Seitenkanäle sind in Längsrichtung angebracht und seitlich offen, um es einem Bohrschlamm oder anderen Materialien in einem Bohrloch zu gestatten, an dem Sondenfuß vorbeizuströmen. Um es auf einer möglichst große Fläche zu ermöglichen, dass der Sondenfuß durch ein Fluid oder Schlamm am Boden eines Bohrlochs eindringen kann, ist stattdessen oder zusätzlich ein Zentralkanal vorgesehen. Die Seitenkanäle oder der Zentralkanal sind bevorzugt parallel zu den Muffen ausgerichtet.

Bei einer zusätzlichen Ausführungsform des vorliegenden Erdwärmesondenfußes weist der Erdwärmesondenfuß an einer Unterseite, die den Muffen gegenüberliegt, zumindest teilweise eine konische Form auf. Durch eine konische Form kann der Erdwärmesondenfuß in den Boden eines Bohrlochs eindringen und eventuell vorhandenen Bohrschlamm besser verdrängen. Durch ein besseres Eindringverhalten kann zudem eine, in ein Bohrloch herabgelassene Erdwärmesonde besser abgebremst werden, wodurch die Belastung für eventuell vorhandene Schweißnähte beim Aufsetzen auf den Grund eines Bohrlochs deutlich verringert wird.

Eine andere beispielhafte Ausführung des Erdwärmesondenfußes gemäß einem der vorstehenden Ansprüche umfasst ein Gewinde an einem oberen Ende des Erdwärmesondenfußes, das zwischen den Muffen angeordnet ist. In dieses Gewinde kann eine Schraube eingeschraubt werden, die die Kraft einer Eindruck- oder Einschubvorrichtung aufnimmt. Bei einer einfachen Ausführung kann eine Inbusschraube als Element dienen, um die Kraft einer Eindruck- oder Einschubvorrichtung in den PE-Block des Sondenfußes zu leiten. Mit der Schraube kann auch eine Rohrhülse angeschraubt werden, die zur Krafteinleitung in den Sondenfüß dient. An solch einem Gewinde kann eine Eindruck- oder Einschubvorrichtung für eine Erdwärmesonde an dem Fuß befestigt werden. Dadurch kann die Sonde besser in das Bohrloch eingeführt und nach unten gedrückt werden. Eine andere beispielhafte Ausführung des Erdwärmesondenfußes umfasst ein Gewinde an einem unteren Ende. In einer beispielhaften Ausführungsform ist eine Spitze in das untere Gewinde eingeschraubt. Eine Spitze aus Metall wie Eisen oder Stahl kann einem Aufprall auf den Grund eines Bohrlochs besser widerstehen als eine konische Spitze aus beispielsweise Polyethylen. Diese Ausführung ist dann wichtig, wenn die Sonde nicht beim ersten Mal sauber abgesenkt werden kann und dadurch der Sondenfuß öfter als ein einziges Mal auf dem Grund des Bohrlochs aufsetzt.

In einer beispielhaften Ausführungsform ist eine Öse in das untere Gewinde eingeschraubt. An eine solche Öse kann ein Gewicht befestigt werden mit dem der Sondenfuß besser in tiefe Bohrlöcher herabgelassen werden kann.

In einer beispielhaften Ausführungsform ist eine Öse aus dem Polyethylenblock selbst herausgearbeitet. Durch eine Öse (in Querrichtung), die direkt am Körper des Erdwärmesondenfußes als Querbohrung angebracht werden kann, ist es einfach möglich, ein Gewicht an dem Erdwärmesondenfuß anzubringen. Der Erdwärmesondenfuß kann im Bereich der Queröse seitlich abgeplattet sein, um ein Befestigen des Gewichts zu vereinfachen.

In einer weiteren Ausführung umfasst der Erdwärmesondenfuß zusätzlich ein Gewicht, das starr an dem Erdwärmesondenfuß befestigt ist. Das Gewicht kann direkt in ein Gewinde eingeschraubt sein, an einer Öse angebracht sein, oder an einem Flacheisen befestigt sein, welches an einem Erdwärmesondenfuß angebracht ist. An dem Flacheisen kann zudem eine Rohrhülse angebracht oder angeschweißt sein, um einen Kraft-Einleitungselement für eine Eindruck- oder Einschubvorrichtung bereitzustellen.

Bei einer weiteren Ausführungsform des Erdwärmesondenfußes bildet der Kanal an einem Ende eine Einströmseite, die an der Grenze zu einer ersten Muffe mit einem Einlauftrichter versehen ist. Es ist jedoch auch möglich, beide Seiten mit einem Einlauftrichter zu versehen. Bei einer anderen Ausführungsform bildet der Kanal an einem anderen Ende eine Ausströmseite. Die Ausströmseite ist dabei bevorzugt an dem Übergang zu einer zweiten Muffe mit einer Auslaufverengung versehen. Die Auslaufverengung stellt eine geringfügige Verringerung des Querschnitts dar, die nur im Bereich des Übergangs zur Muffe auftritt. Diese Querschnittsverringerung soll dabei nur die Strömungsverhältnisse an einen Übergangsbereich zwischen dem Kanal und einem in die Muffe eingeschweißten Erdwärmerohr verbessern. Durch die Auslaufverengung soll der Strömungswiderstand am Übergang leicht verbessert werden. Obwohl dieser Effekt bei langen Erdwärmesonden sehr gering erscheinen mag, addiert er sich bei mehreren Erdwärmesonden bis in einen messbaren Bereich.

In einer Ausführungsform des Erdwärmesondenfußes besteht der Polyethylenblock aus PE 100. In einer Ausführungsform des Erdwärmesondenfußes besteht der Polyethylenblock aus PE 100 RC. In einer Ausführungsform des Erdwärmesondenfußes besteht der Polyethylenblock aus PE 100 RT. Diese beiden Materialien lassen sich besonders gut mit dem Material verschweißen, aus dem Erdwärmerohre hergestellt werden.

Gemäß einer weiteren Ausführungsform der vorliegenden Erfindung wird eine Erdwärmesonde bereitgestellt. Die Erdwärmesonde umfasst in einer Ausführungsform einen der vorstehend beschriebenen Erdwärmesondenfüße, der mit glatten Erdwärmerohren verschweißt ist. Die Erdwärmesonde umfasst in einer bevorzugten Ausführungsform einen der vorstehend beschriebenen Erdwärmesondenfüße, der mit geriffelten Erdwärmerohren verschweißt ist. Bei einer besonders bevorzugten Ausführungsform ist ein Erdwärmefuß mit einem Einlauftrichter mit Erdwärmerohen kombiniert, die eine Flussrichtung des Erdwärmefluids erkennen lassen.

In einer Ausführungsform der Erdwärmesonde besteht diese aus Polyethylen PE 100. In einer anderen Ausführungsform der Erdwärmesonde besteht diese aus PE 100 RC. In einer zusätzlichen Ausführungsform der Erdwärmesonde besteht diese aus Polyethylen PE 100 RT.

Gemäß einer weiteren Ausführungsform wird ein Verfahren zum Herstellen eines Erdwärmesondenfußes bereitgestellt wie er vorstehend beschrieben ist. Das Verfahren umfasst ein Bereitstellen eines einzelnen Blocks aus Polyethylen. Der Block wird spanend bearbeitet, um eine äußere Form des Erdwärmesondenfuß herauszuarbeiten. Das Verfahren umfasst weiter ein Bohren bzw. Fräsen von 2 bis 4 Muffen in eine Oberseite des Blocks. Das Verfahren umfasst weiterhin ein Fräsen eines U-Förmigen Kanals, unter Verwendung einer 5-Achsen-CNC-Fräse und/oder unter Verwendung eines Kugelfräskopfes mit einem Wirbelfräsverfahren.

In einer weiteren Ausführungsform umfasst das Verfahren weiter das Verbinden des vorstehend hergestellten bzw. beschriebenen Erdwärmesondenfußes mit Erdwärmerohren durch Anschweißen.

Bevorzugt wird ein Kanal mit den vorstehend beschriebenen Eigenschaften in den Polyethylen-Block gefräst.

In den Figuren werden Ausführungsformen der vorliegenden Erfindung schematisch dargestellt.
Figuren 1A und 1B zeigen einen herkömmlichen Erdwärmesondenfuß, der aus zwei Stücken zusammengesetzt ist, in einer Aufsicht und in einer Schnittansicht.
Figuren 2A bis 2C zeigen eine Aufsicht von oben und zwei Schnittansichten von Ausführungsformen eines erfindungsgemäßen Erdwärmesondenfußes.
Figur 2B zeigt eine Aufsicht von oben auf eine Querschnittsoptimierte Ausführungsform eines erfindungsgemäßen Erdwärmesondenfuß.
Figuren 3A bis 3C zeigen eine Aufsicht von oben und zwei Schnittansichten von einer Ausführungsform eines erfindungsgemäßen Einfach-U-Erdwärmesondenfußes.
Figuren 4A bis 4C zeigen eine Aufsicht von oben und zwei Schnittansichten von einer Ausführungsform eines erfindungsgemäßen Doppel-U-Erdwärmesondenfußes, der aus zwei Einfach-U-Erdwärmesondenfüßen nach Figur 3A bis 3C zusammengesetzt sind.
Figuren 5A bis 5C zeigen einzelne Schritte zum Spanen des Kanals.
Figur 6 zeigt einen Schnitt durch einen Kanal mit Einström- bzw. Ausström-Konen.
Figuren 7A und 7B stellen ein Durchmesserprofil bzw. Höhenprofil von Abschnitten des Kanals dar.

Sowohl in den Figuren als auch in der Beschreibung werden gleiche oder ähnliche Bezugszeichen verwendet, um auf gleiche oder ähnliche Elemente und Komponenten Bezug zu nehmen.

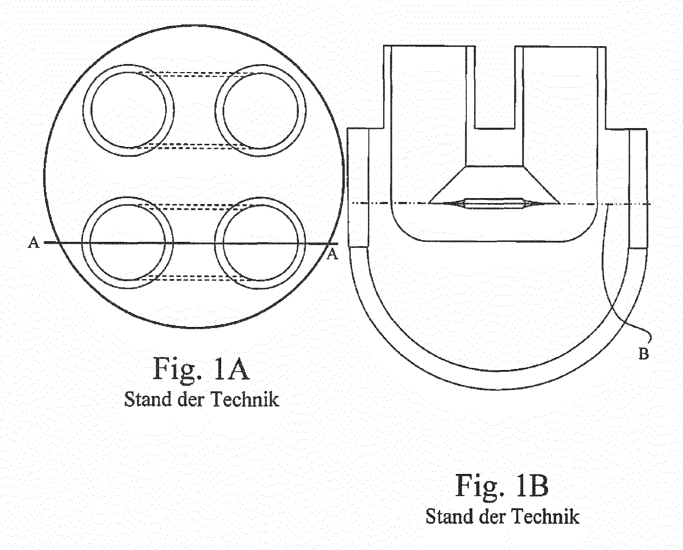

Figuren 1A und 1B zeigen einen herkömmlichen Erdwärmesondenfuß, der aus zwei Stücken zusammengesetzt ist in einer Aufsicht und in einer Schnittansicht.

In der Aufsicht von Figur 1A sind vier Ansatzstücke zu erkennen, an die mit einer gesonderten Heizmuffe Erdwärmerohre angeschlossen werden können. An dem Doppel-U-Sondenfuß ist eine Schnittlinie A-A dargestellt.

Figur 1B stellt einen Schnitt durch Figur 1A dar. In Figur 1B ist eine Linie dargestellt, an denen die Teile zusammengeschweißt wurden. Beim Stand der Technik wurden die beiden Teile vor dem Zusammenschweißen mit im Querschnitt halbrunden Kanälen versehen, die nach dem Zusammenfügen einen U-förmigen Kanal ergeben. An den durch die Bohrungen erreichbaren Stellen kann eine herausgequollene Schweißnaht herausgebohrt werden. In dem waagerechten Teil des u-förmigen Kanals ist dies jedoch nicht möglich, wie es mit einer Endoskop-kamera oder einem Inspektionsspiegel an einem Sondenfuß nachgewiesen werden kann. Diese Reste von Schweißnähten stören die Strömung eines Erdwärmefluids. Die herkömmliche Auslegung hat zudem den Nachteil, dass an den Innenseiten der Bogenabschnitte Kanten mit einem Winkel von 90° auftreten, was sich ebenfalls negativ auf das Strömungsverhalten des Erdwärmefluids auswirkt.

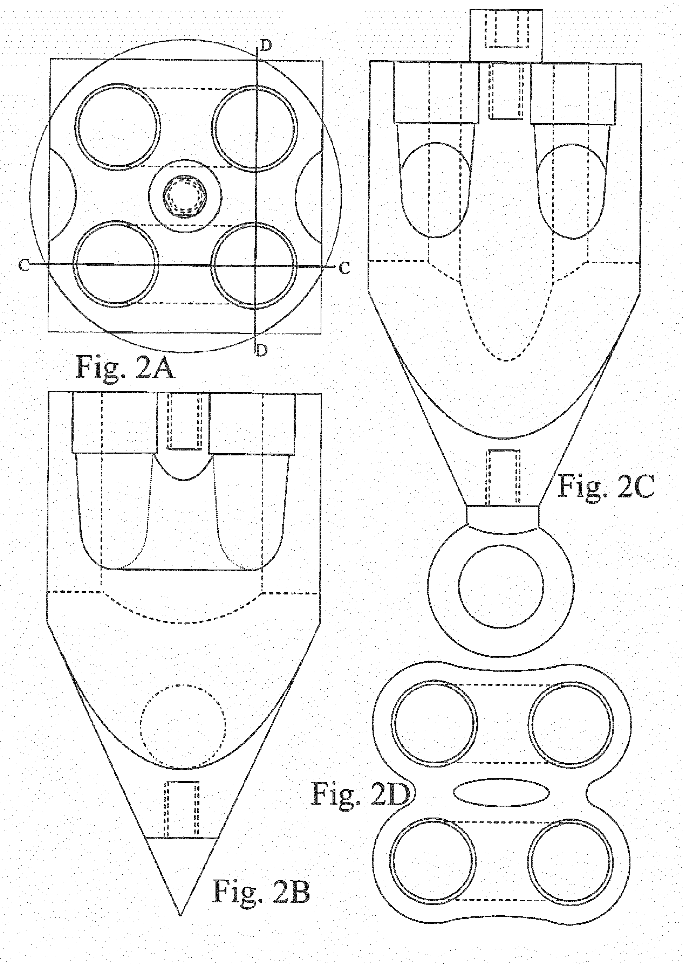

Figuren 2A bis 2C zeigen eine Aufsicht von oben und zwei Schnittansichten von Ausführungsformen eines erfindungsgemäßen Erdwärmesondenfußes.

Figur 2A zeigt eine Aufsicht auf einen erfindungsgemäßen Doppel-U-Erdwärmefuß 2. Der Doppel-U-Erdwärmefuß 2 umfasst einen ersten und einen zweiten u-förmigen Kanal. Jeder der Kanäle endet in zwei der insgesamt vier parallelen Muffen. In der Mitte ist ein oberes Gewinde an einem oberen Ende des Erdwärmefußes 2 angebracht, um ein Einschubgestänge anzubringen. In das Gewinde ist eine Inbusschraube eingesetzt, die dazu dient, eine Kraft von einem Einschubgestänge in den Sondenfuß 2 einzuleiten. Seitlich ist der Erdwärmefuß 2 mit zwei Seitenkanälen versehen, die die projizierte Stirnfläche des Erdwärmefußes 2 verringern. Der Erdwärmefuß 2 umfasst dabei lediglich einen einzigen einstückigen Körper ohne eine Schweißnaht und ohne irgendwelche Gussnähte innerhalb der Kanäle. Die Schnittlinien C-C und D-D zeigen die Schnittverläufe der Schnittansichten von Figur 2B und 2C.

Figur 2B zeigt eine Schnittansicht des erfindungsgemäßen Doppel-U-Erdwärmefuß 2 entlang der Schnittlinie C-C von Figur 2A. Im Schnitt ist der genaue Verlauf des zweiten u-förmigen Kanals zu erkennen. Da der Doppel-U-Erdwärmefuß 2 aus einem einzigen einstückigen Körper spanend herausgearbeitet ist, weist der Kanal keine Schweißnähte, Schweißraupen oder dergleichen auf. Der zweite u-förmige Kanal endet in insgesamt zwei parallelen Muffen. Oben in der Mitte ist ein oberes Gewinde an dem oberen Ende des Erdwärmefußes 2 angebracht, um ein Einschubgestänge anzubringen. Unten in der Mitte ist ein unteres Gewinde an einer Unterseite des Erdwärmefußes 2 angebracht. In das untere Gewinde ist in Figur 2B eine Spitze eingeschraubt. Durch einen strichpunktierten Kreis ist der Ort angegeben, an dem aus dem Körper des Erdwärmefußes 2 eine Öse herausgearbeitet sein kann. Dazu kann der Unterteil des Erdwärmefußes 2 abgeflacht werden, um beispielsweise ein Gewicht besser aufnehmen zu können. In Figur 2B ist die Inbusschraube ; nicht dargestellt.

Figur 2C zeigt eine Schnittansicht des erfindungsgemäßen Doppel-U-Erdwärmefuß 2 entlang der Schnittlinie D-D von Figur 2A. Im Schnitt ist der genaue Querschnitt einer Ausführung der zwei u-förmigen Kanäle zu erkennen. Da der Doppel-U-Erdwärmefuß 2 aus einem einzigen einstückigen Körper spanend herausgearbeitet ist, weisen die Kanäle keinerlei Schweißnähte, Schweißraupen oder dergleichen auf. Auch hier enden die u-förmigen Kanäle in insgesamt 2 parallelen Muffen. Oben in der Mitte befindet sich ein oberes Gewinde an dem oberen Ende Erdwärmefußes 2. In das Gewinde ist eine Inbusschraube eingesetzt, deren Kopf in einer Seitenansicht zu erkennen ist. Unten in der Mitte ist ein unteres Gewinde an einer Unterseite des Erdwärmefußes 2 angebracht. In das untere Gewinde ist in Figur 2C eine Einschrauböse anstelle der Spitze von Figur 2B eingeschraubt. Ein Gewicht kann so einfach an der Öse eingehängt werden.

In Figur 2D ist eine Aufsicht auf einen Erdwärmefuß mit den Muffen und den Kanälen 12 dargestellt. Der Erdwärmefuß mit ist mit zwei Seitenkanälen und einem Zentralkanal versehen. Der Erdwärmefuß von Figur 2D ist auf eine minimale projizierte Stirnfläche optimiert. Da der Erdwärmefuß aus einem vollen Stück herausgespant ist, ist es ebenfalls möglich, die gesamte Außenform beliebig zu gestalten, ohne dadurch den bisherigen Einschränkungen herkömmlicher spanender Werkzeugmaschinen zu unterliegen.

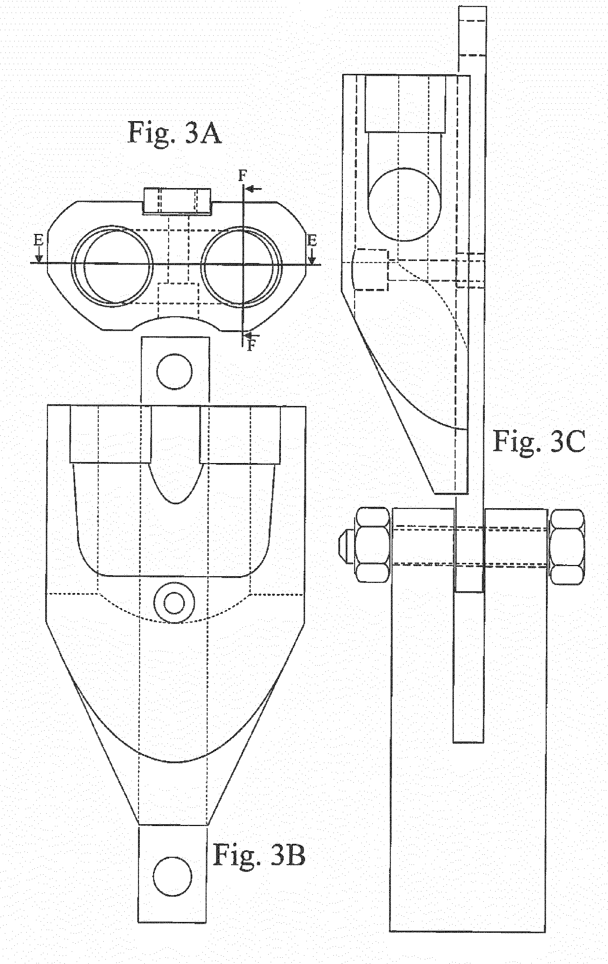

Figuren 3A bis 3C zeigen eine Aufsicht von oben und zwei Schnittansichten von einer Ausführungsform eines erfindungsgemäßen Einfach-U-Erdwärmesondenfußes.

Figur 3A zeigt eine Aufsicht auf einen erfindungsgemäßen Einfach-U-Erdwärmefuß. Der Einfach-U-Erdwärmefuß 2 umfasst nur einen ersten u-förmigen Kanal. Der Kanal endet in insgesamt zwei parallelen Muffen. An einer Seite des Einfach -U-Erdwärmefuß ist eine Längsnut eingelassen. In der Längsnut ist ein Flacheisen oder ein Flachstahl angeordnet, der mit einer Durchgangsschraube (nicht gezeigt) an dem Einfach-U-Erdwärmefuß befestigt ist. durch die Nut kann sich das Flacheisen nicht verdrehen und ist stabilisiert. An den Löchern des Flacheisens kann ein Einschubgestänge oder ein Gewicht angebracht werden. An einer Seite ist der Einfach -U-Erdwärmefuß mit einem Seitenkanal versehen. Auch hier umfasst der Erdwärmefuß 2 lediglich einen einzigen einstückigen Körper, ohne eine Schweißnaht und ohne irgendwelche Gussnähte innerhalb des Kanals. Die Schnittlinien E-E und F-F zeigen die Schnittverläufe der Schnittansichten von Figur 3B und 3C.

Figur 3B zeigt eine Schnittansicht des erfindungsgemäßen Einfach-U-Erdwärmefußes entlang der Schnittlinie E-E von Figur 3A. Im Schnitt ist der genaue Verlauf des zweiten u-förmigen Kanals zu erkennen. Der Einfach-U-Erdwärmefuß ist auch hier aus einem einzigen massiven Körper spanend herausgearbeitet. Der Kanal weist keine Schweißnähte, Schweißraupen oder Gussgrate auf. Der u-förmige Kanal endet in insgesamt 2 parallelen Muffen. In der Mitte ist eine Durchgangsbohrung angebracht, durch die eine Schraube oder ein Niet das Flacheisen an dem Erdwärmefuß in der Längsnut befestigen kann. In der Figur ist gut zu erkennen, dass die Innenkontur des Kanals nahezu parabelförmig und glatt und ohne Kanten ausgestaltet ist.

Figur 3C zeigt eine Schnittansicht des erfindungsgemäßen Einfach-U-Erdwärmefußes entlang der Schnittlinie F-F von Figur 3A. Im Schnitt ist der genaue und kreisrunde Querschnitt dieser Ausführung des u-förmigen Kanals zu erkennen. Auch hier weist der Kanal keinerlei Schweißnähte, Schweißraupen oder dergleichen auf. Auch hier endet der u-förmige Kanal in zwei parallelen Muffen. An der linken Seite ist der Seitenkanal von Figur 3A gut zu erkennen. Unten ist ein Gewicht starr an dem Flacheisen angeschraubt.

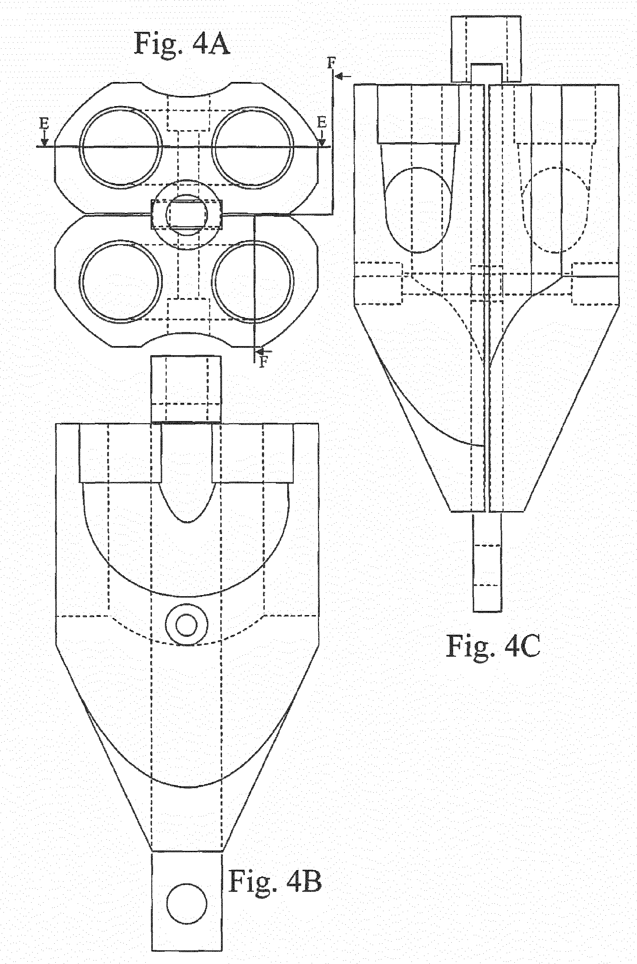

Figur 4A zeigt eine Aufsicht auf einen erfindungsgemäßen doppelten Einfach-U-Erdwärmefuß. Der Doppel-Einfach-U-Erdwärmefuß umfasst jeweils zwei getrennte erfindungsgemäße Einfach-U-Erdwärmesondenfüße, mit jeweils nur einem u-förmigen Kanal. Der Kanal endet jeweils in zwei parallelen Muffen. An einer Seite jedes der Einfach -U-Erdwärmefüße ist eine Längsnut eingelassen. In den Längsnuten ist ein Flacheisen oder ein Flachstahl angeordnet, der die beiden Füße miteinander durch eine nicht gezeigte Durchgangsschraube verbindet. Durch die Nut und das Flacheisen können sich die einzelnen Füße nicht gegeneinander verdrehen oder verschieben. Oben an dem Flacheisen ist eine Rohrhülse angebracht, in die ein Einschubgestänge oder ein Gewicht eingesteckt werden kann. An einer Seite ist jeder der Einfach-U-Erdwärmefüße jeweils mit einem Seitenkanal versehen. Auch hier umfasst jeder der Erdwärmefüße lediglich einen einzigen einstückigen Körper einen Kanal ohne eine Schweißnaht und ohne irgendwelche Gussnähte innerhalb des Kanals. Die Schnittlinien G-G und H-H zeigen die Schnittverläufe der Schnittansichten von Figur 4B und 4C.

Figur 4B zeigt eine Schnittansicht des erfindungsgemäßen doppelten Einfach-U-Erdwärmefußes entlang der Schnittlinie G-G von Figur 4A. Im Schnitt ist der genaue Verlauf des zweiten u-förmigen Kanals zu erkennen. In der Mitte ist eine Durchgangsbohrung angebracht, durch die eine Schraube oder ein Niet die beiden Füße miteinander verbinden kann. Die Innenkontur des Kanals ist nahezu parabelförmig und glatt und weist keine Kanten auf. Im Gegensatz zu Figur 4A und 4C ist an dem Flacheisen oben nur eine Durchgangsbohrung dargestellt, um ein Einschubgestänge daran zu befestigen.

In Figur 4B ist der Kanal in einer besonders ausgerundeten Ausführung dargestellt.

Figur 4C zeigt eine Schnittansicht des erfindungsgemäßen Einfach-U-Erdwärmefußes entlang der Schnittlinie H-H von Figur 4A. Der Schnitt entspricht im Wesentlichen dem
Schnitt von Figur 3C, wobei auch die gleichen Bezugszeichen verwendet wurden. Oben an dem Flacheisen ist auch hier eine Rohrhülse angebracht, in die ein Einschubgestänge oder ein Gewicht eingesteckt werden kann.

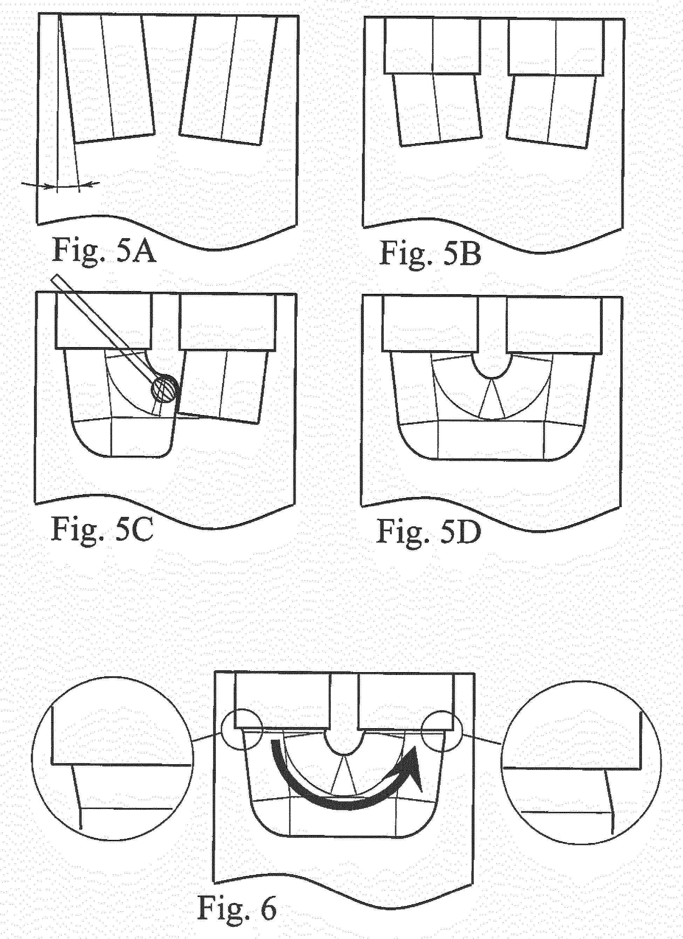

Figuren 5A bis 5C zeigen einzelne Schritte zum Spanen des Kanals. Zum Spanen des Kanals kann, wie in Figur 5A dargestellt, mit dem Bohren oder Fräsen einer ersten Bohrung II und einer zweiten Bohrung VI begonnen werden. Die Bohrungen II und VI sind hier in einem Winkel von 8° zueinander in den Körper hineingebohrt. Die beiden Bohrungen II und VI berühren sich dabei nicht. In Figur 5B ist dargestellt, wie die beiden Muffen I und VII in den Block hineingebohrt oder gefräst werden, um eine Anschlussmöglichkeit für die späteren Erdwärmerohre zu schaffen. In Figur 5C ist dargestellt, wie mit einem Kugelkopffräser ein erster Bogenabschnitt III in den Block hineingefräst wird. Mit einem spiegelsymmetrischen Vorgang kann der Kanal vervollständigt werden, wie es in der Figur 5D dargestellt ist.

In Figur 5D sind die beiden Bogenabschnitte III und V durch einen kurzen waagerechten Abschnitt IV verbunden.

Figur 6 zeigt einen Schnitt durch einen Kanal mit Einström- bzw. Ausström-Konen bzw. - Trichtern. In Figur 6 ist der Übergang zwischen der erste Muffe I und der ersten Bohrung II an einer Einströmseite mit einem Einlauftrichter versehen, der nicht Teil der Erfindung ist, und der den Strömungswiederstand an dieser Stelle, an einem Spalt oder einer Schweißnaht verringert. An der anderen Seite ist am Übergang zwischen der zweiten Bohrung VI und der zweiten Muffe VII eine Ausström- bzw. Auslaufseite mit einer Auslaufverengung versehen, die den Strömungswiederstand an dieser Stelle verringert, da der Fluidstrom von einem Spalt oder einer Schweißnaht weggeleitet wird. Die Querschnittsverringerung kann dabei sehr gering ausfallen, und glatt ausgeführt werden, um den Fluidstrom von einem Spalt wegzulenken. Es ist erfindumgsgemäß möglich ganz auf eine Querschnittsverengung zu verzichten, wenn der Querschnitt vor dem Ende der Bohrung erweitert wird, und am Ende der Bohrung wieder auf ein Normalmaß verringert wird. Ein derartiger Erdwärmesondenfuß kann mit einer Strömungsrichtungsangabe versehen sein, um zu verhindern, dass die Einström- bzw. Ausström-Konen von einer falschen Seite aus angeströmt werden. Diese Ausführung kann vorteilhaft mit verschieden geriffelten Erdwärmerohen kombiniert werden.

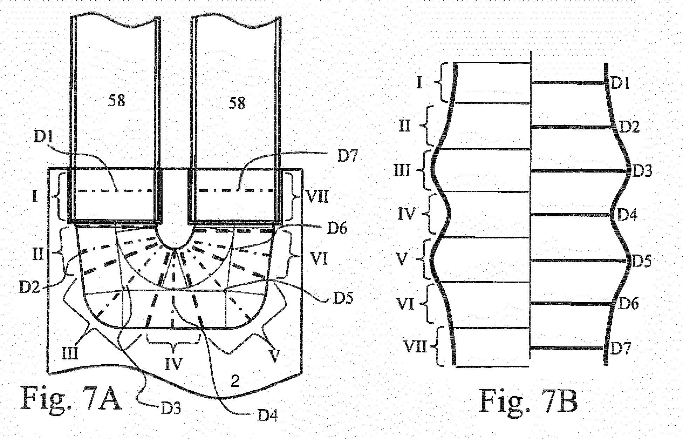

Figuren 7A und 7B stellen ein Durchmesserprofil bzw. Höhenprofil von Abschnitten des Kanals dar. In Figur 7A sind die einzelnen Abschnitte des Kanals mit den entsprechenden Unterteilungen dargestellt. Der Abschnitt I bezeichnet die erste Muffe mit einem Durchmesser D1. Der Abschnitt II bezeichnet die erste Bohrung mit einem Durchmesser D2. Der Abschnitt III bezeichnet den ersten Bogenabschnitt mit einem erhöhten Durchmesser D3. Der Abschnitt IV bezeichnet einen Abschnitt zwischen den Bogenabschnitten mit einem Durchmesser D4. Der Abschnitt V bezeichnet den zweiten Bogenabschnitt mit einem erhöhten Durchmesser D5. Der Abschnitt VI bezeichnet die erste Bohrung mit einem Durchmesser D6. Der Abschnitt VII bezeichnet die erste Muffe mit einem Durchmesser D7.

Durch die vergrößerte Querschnittsfläche des Kanals an dem ersten und dem zweiten Bogenabschnitt III und V im Vergleich zu dem Nenndurchmesser D2 und D5 der ersten und der zweiten Bohrung bzw. einem Innendurchmesser des Erdwärmerohrs wird die Strömungsgeschwindigkeit an diesen Stellen herabgesetzt. Durch eine kleinere Strömungsgeschwindigkeit des Erdwärmefluids wird die Belastung des Kanals bzw. der Kanalwand im Bereich der Bogenabschnitte III und V verringert. Durch einen vergrößerten Querschnitt im Bereich der Bogenabschnitte wird eine längere Lebensdauer des Erdwärmesondenfußes erwartet.

Figur 7B stellt den Verlauf der Durchmesser entlang einer Mittellinie des Kanals dar, um den Verlauf und die Veränderung der Breite bzw. eines Durchmessers des Kanals darzustellen.

Ein Verfahren zum Herstellen eines vorstehenden Erdwärmesondenfußes, umfasst:Bereitstellen eines einzelnen Blocks aus Polyethylen,spanendes Bearbeiten des Blocks, um eine äußere Form des Erdwärmesondenfuß (2) herauszuarbeiten, Bohren bzw. Fräsen von 2 bis 4 Muffen in eine Oberseite des Blocks aus Polyethylen, sowie Fräsen eines U-Förmigen Kanals, unter Verwendung einer 5-Achsen-CNC-Fräse oder unter Verwendung eines Wirbelfräsvorrichtung.

Ein Verfahren kann weiter umfassen:
Verbinden des Erdwärmesondenfußes (2) wie vorstehend mit Erdwärmerohren durch Anschweißen.

Mit den dargestellten Ausführungen sollen auch alle Kombinationen von Merkmalen als offenbart angesehen werden, die nicht explizit in einer Figur zusammen kombiniert wurden.

### Bezugszeichenliste

2 Erdwärmesondenfuß 58 Erdwärmerohr I erste Muffe II erste Bohrung III erste Bogenabschnitt IV Abschnitt zwischen den Bogenabschnitte
- V: zweite Bogenabschnitt
- VI: zweite Bohrung
- VII: zweite Muffe
- D1: Durchmesser erste Muffe
- D2: Durchmesser erste Bohrung
- D3: Durchmesser erste Bogenabschnitt
- D4: Durchmesser Abschnitt zwischen den Bogenabschnitte
- D5: Durchmesser zweite Bogenabschnitt
- D6: Durchmesser zweite Bohrung
- D7: Durchmesser zweite Muffe

## Patentansprüche

1. Erdwärmesondenfuß (2) aus Polyethylen, umfassend:
einen einstückigen Körper mit mindestens zwei parallel ausgerichteten Muffen (I, VII) zur Verbindung mit mindestens zwei Erdwärmerohren (58), wobei der Körper mindestens einen u-förmigen Kanal aufweist, der zwei der mindestens zwei Muffen (I, VII) miteinander verbindet, wobei der u-förmige Kanal glatt ist und keine Querschnittsverengungen aufweist, und
wobei der Erdwärmesondenfuß (2) aus einem einzelnen Polyethylen-Block spanend herausgearbeitet ist,
**dadurch gekennzeichnet, dass** der mindestens ein u-förmiger Kanal anschließend an jede der beiden Muffen (I, VII), die durch ihn verbunden sind, jeweils eine jeweilige Bohrung (II, VI) umfasst, wobei die Bohrungen (II, VI) jeweils in einen jeweiligen Bogenabschnitt (III, V) übergehen,
und wobei die jeweiligen Bogenabschnitte (III, V) durch einen Abschnitt zwischen den Bogenabschnitte (III, V) verbunden sind, und wobei die Bogenabschnitte (III, V) gegenüber den Bohrungen (II, VI) und dem Abschnitt (IV) zwischen den Bogenabschnitten (III, V) einen erhöhten Durchmesser aufweisen, und wobei die zwei Bohrungen (II, VI) jeweils einen Winkel zwischen 4° und 12° zu den Muffen (I, VII) aufweisen, und
wobei eine Querschnittsfläche des Kanals in den Bogenabschnitten (III, V) gegenüber einem Ende der Bohrung (II, VI) um 10% bis 50% vergrößert ist..

2. Erdwärmesondenfuß (2) gemäß Anspruch 1, **dadurch gekennzeichnet, dass** der Abschnitt (IV) zwischen den Bogenabschnitten (III, V) eine Querschnittsfläche aufweist, die über seine Länge gleich ist, und bevorzugt der Querschnittsfläche der Bohrungen (II, VI) entspricht.

3. Erdwärmesondenfuß (2) gemäß einem der vorstehenden Ansprüche, **dadurch gekennzeichnet, dass** eine Innenkontur des Kanals eine Parabel bildet.

4. Erdwärmesondenfuß (2) gemäß einem der vorstehenden Ansprüche, wobei der u-förmige Kanal mittels einer 5-Achsen-CNC-Fräse und/oder durch Wirbelfräsen aus dem Polyethylen-Block herausgearbeitet ist.

5. Erdwärmesondenfuß (2) gemäß einem der vorstehenden Ansprüche, **gekennzeichnet durch** einen Körper, der zwei Muffen und einen Kanal aufweist und bevorzugt weiter eine Längsnut umfasst, in der bevorzugt ein Flacheisen eingelegt bzw. befestigt ist und wobei bevorzugt ein Rohrhülse oben an dem Flacheisen angebracht ist.

6. Erdwärmesondenfuß (2) umfassend zwei miteinander verbundene Erdwärmesondenfüße gemäß Anspruch 5.

7. Erdwärmesondenfuß (2) gemäß einem der vorstehenden Ansprüche 1 bis 4, **gekennzeichnet durch** vier Muffen und zwei u-förmige Kanäle, und/oder, einen, zwei, drei oder vier Seitenkanäle und/oder einen Zentralkanal und/oder wobei der Erdwärmesondenfuß (2) an einer Unterseite, die den Muffen gegenüberliegt, zumindest teilweise eine konische Form aufweist.

8. Erdwärmesondenfuß (2) gemäß einem der vorstehenden Ansprüche, **gekennzeichnet durch** ein oberes Gewinde, das zwischen den Muffen an einem oberen Ende des Erdwärmesondenfußes (2) angeordnet ist, wobei bevorzugt eine Schraube in das obere Gewinde eingeschraubt ist, und/oder durch ein unteres Gewinde, das an einem unteren Ende des Erdwärmesondenfußes (2) angeordnet ist, wobei bevorzugt eine Spitze oder eine Öse, in das untere Gewinde eingeschraubt ist, und/oder durch eine Öse am unteren Ende, die direkt aus dem Polyethylenblock herausgearbeitet ist, und/oder, weiter umfassend ein Gewicht, das starr an dem Erdwärmesondenfuß (2) befestigt ist.

9. Erdwärmesondenfuß (2) gemäß einem der vorstehenden Ansprüche, wobei der Kanal an einem Ende eine Einströmseite bildet, die an dem Übergang zu einer ersten Muffe (I) mit einem Einlauftrichter versehen ist.

10. Erdwärmesonde umfassend einen Erdwärmesondenfuß (2) gemäß einem der vorstehenden Ansprüche 1 bis 9.

11. Erdwärmesondenfuß (2) gemäß einem der Ansprüche 1 bis 9 und/oder Erdwärmesonde gemäß Anspruch 10, **dadurch gekennzeichnet, dass** der Polyethylenblock, der Erdwärmesondenfuß (2), das Erdwärmerohr und/oder die Erdwärmesonde PE 100 oder PE 100 RC oder PE 100 RT umfassen.

## Claims

1. A geothermal probe base (2) made of polyethylene, comprising:
a one-piece body
having at least two sleeves (I, VII) aligned in parallel for connecting to at least two geothermal pipes (58),
wherein the body has at least one U-shaped channel, which connects two of the at least two sleeves to one another, wherein the U-shaped channel is smooth and does not have any constricted cross-sectional segments, and
wherein the geothermal probe base (2) is cut from a single polyethylene block,
**characterized in that**
the at least one U-shaped channel comprises one borehole (II, VI) connected to each one of the two sleeves connected by the channel,
wherein the boreholes (II, VI) each develop into a respective curved segment (III, V), and
wherein the respective curve segments (III, V) are connected by a segment between the curved segments (III, V), and
wherein the curved segments (III, V) have an increased diameter in comparison with the boreholes (II, VI) and the segment (IV) between the curved segments (III, V), and wherein the two boreholes (II, VI) each form an angle between 4° and 12° with the sleeves (I, VII), and
wherein the cross-sectional area of the channel is increased by 10% to 50% in the curved segments (III, V) in comparison with one end of the borehole (II, VI) .

2. The geothermal probe base (2) according to claim 1,
**characterized in that**
the segment (IV) has a cross-sectional area between the curved segments (III, V), which is the same over its length and preferably corresponds to the cross-sectional area of boreholes (II, VI).

3. The geothermal probe base (2) according to any one of the preceding claims,
**characterized in that**
an internal contour of the channel forms a parabola.

4. The geothermal probe base (2) according to any one of the preceding claims, wherein the U-shaped channel is cut from the polyethylene block by means of 5-axis CNC milling and/or by trochoidal milling.

5. The geothermal probe base (2) according to any one of the preceding claims,
**characterized by**
a body comprising two sleeves and one channel, and preferably additionally comprising a longitudinal groove, into which a flat bar is preferably inserted and/or secured, and wherein a pipe sleeve is preferably provided on the top of the flat bar.

6. The geothermal probe base (2), comprising two geothermal probe bases according to claim 5, connected to one another.

7. The geothermal probe base (2) according to any one of the preceding claims 1 to 4,
**characterized by**
four sleeves and two U-shaped channels and/or one, two, three or four side channels and/or one central channel and/or wherein the geothermal probe base (2) has a conical shape at least partially on a bottom side opposite the sleeves.

8. The geothermal probe base (2) according to any one of the preceding claims,
**characterized by**
an upper thread, which is provided between the sleeves on an upper end of the geothermal probe base (2), wherein a screw is preferably screwed into the upper thread and/or **characterized by** a lower thread, which is provided on a lower end of the geothermal probe base (2), wherein a tip or an eye is preferably screwed into the lower thread and/or through an eye on the lower end, which is cut directly from the polyethylene block, and/or additionally comprising a weight, which is rigidly attached to the geothermal probe base (2).

9. The geothermal probe base (2) according to any one of the preceding claims, wherein the channel forms an inflow side at one end, which is provided with an inlet funnel at the transition to the first sleeve (I) .

10. A geothermal probe, comprising a geothermal probe base (2) according to any one of the preceding claims 1 through 9.

11. The geothermal probe base (2) according to any one of claims 1 to 9 and/or the geothermal probe according to claim 10, **characterized in that**
the polyethylene block, the geothermal probe base (2), the geothermal pipe and/or the geothermal probe is/are made of PE 100 or PE 100 RC or PE 100 RT.

## Revendications

1. Pied de sonde géothermique (2) en polyéthylène, comprenant :
un corps intégral avec au moins deux manchons (I, VII) alignés en parallèle destinés à une connexion à au moins deux tubes géothermiques (58),
dans lequel le corps présente au moins un canal en forme de U reliant ensemble deux des au moins deux manchons (I, VII), le canal en forme de U étant lisse et ne présentant pas de rétrécissements de section, et
dans lequel le pied de sonde géothermique (2) est façonné par enlèvement de matière à partir d'un seul bloc de polyéthylène,
**caractérisé en ce que** ledit au moins un canal en forme de U comprend après chacun des deux manchons (I, VII) reliés par celui-ci respectivement un alésage respectif (II, VI), les alésages (II, VI) passant respectivement à une partie arrondie (III, V) respective, et
dans lequel les parties arrondies respectives (III, V) sont reliées par une partie entre les parties arrondies (III, V), et dans lequel les parties arrondies (III, V) présentent par rapport aux alésages (II, VI) et à la partie (IV) entre les parties arrondies (III, V) un diamètre accru, et dans lequel les deux alésages (II, VI) présentent respectivement un angle compris entre 4° et 12° par rapport aux manchons (I, VII), et
dans lequel une superficie de la section du canal dans les parties arrondies (III, V) est plus grande de 10 % à 50 % par rapport à une extrémité de l'alésage (II, VI).

2. Pied de sonde géothermique (2) selon la revendication 1, **caractérisé en ce que** la partie (IV) entre les parties arrondies (III, V) présente une superficie de la section égale sur sa longueur et qui correspond de préférence à la superficie de la section des alésages (II, VI) .

3. Pied de sonde géothermique (2) selon l'une quelconque des revendications précédentes, **caractérisé en ce qu'**un contour intérieur du canal est une parabole.

4. Pied de sonde géothermique (2) selon l'une quelconque des revendications précédentes, dans lequel le canal en forme de U est façonné à partir du bloc de polyéthylène au moyen d'une fraiseuse CNC à 5 axes par fraisage en tourbillon.

5. Pied de sonde géothermique (2) selon l'une quelconque des revendications précédentes, **caractérisé par** un corps présentant deux manchons et un canal et de préférence de plus une rainure longitudinale dans laquelle un fer plat est de préférence inséré ou fixé, et dans lequel un manchon tubulaire est rattaché en haut au fer plat.

6. Pied de sonde géothermique (2), comprenant deux pieds de sonde géothermiques selon la revendication 5, reliés ensemble.

7. Pied de sonde géothermique (2) selon l'une quelconque des revendications 1 à 4, **caractérisé par** quatre manchons et deux canaux en forme de U, et/ou un, deux, trois ou quatre canaux latéraux et/ou un canal central et/ou dans lequel le pied de sonde géothermique (2) présente au moins en partie une forme conique sur une face inférieure opposée aux manchons.

8. Pied de sonde géothermique (2) selon l'une quelconque des revendications précédentes, **caractérisé par**
un filetage supérieur disposé entre les manchons à une extrémité supérieure du pied de sonde géothermique (2), une vis étant de préférence vissée dans le filetage supérieur, et/ou
un filetage inférieur disposé à une extrémité inférieure du pied de sonde géothermique (2), une pointe ou un œillet étant de préférence vissé(e) dans le filetage inférieur, et/ou
un œillet à l'extrémité inférieure directement façonné à partir du bloc de polyéthylène, et/ou
comprenant en outre un poids fixé solidement au pied de sonde géothermique (2).

9. Pied de sonde géothermique (2) selon l'une quelconque des revendications précédentes, dans lequel le canal constitue à une extrémité un côté admission muni d'un entonnoir d'entrée au niveau du passage à un premier manchon (I).

10. Sonde géothermique, comprenant un pied de sonde géothermique selon l'une quelconque des revendications précédentes 1 à 9.

11. Pied de sonde géothermique (2) selon l'une quelconque des revendications 1 à 9 et/ou sonde géothermique selon la revendication 10, **caractérisés en ce que** le bloc de polyéthylène, le pied de sonde géothermique (2), le tube géothermique et/ou la sonde géothermique comprennent du PE 100 ou du PE 100 RC ou du PE 100 RT.
